# EUROPÄISCHE PATENTSCHRIFT

(11) **EP 1 342 616 B1**
(45) Veröffentlichungstag und Bekanntmachung des Hinweises auf die Patenterteilung: **04.07.2007**
(21) Anmeldenummer: 03004392.1
(22) Anmeldetag: 03.03.2003
(51) Int. Cl.: B60Q 1/00

(54) **Scheinwerferanordnung für Fahrzeuge**
Vehicle headlamp assembly
Phare pour véhicules

(30) Priorität: 05.03.2002 DE 10209590
(43) Veröffentlichungstag der Anmeldung: 10.09.2003
(73) Patentinhaber: Volkswagen Aktiengesellschaft, 38436 Wolfsburg (DE)
(72) Erfinder: Ortmann, Frank, 38527 Meine (DE); Mössner, Malte, 38100 Braunschweig (DE); Werner, Michael, 38106 Braunschweig (DE)
(74) Vertreter: Rabe, Andreas

(56) Entgegenhaltungen:
- EP-A- 0 900 694
- DE-A1- 10 065 020
- US-A- 5 984 497

## Beschreibung

Die vorliegende Erfindung betrifft eine Scheinwerferanordnung für Fahrzeuge mit einem Gehäuse und zumindest einer von dem Gehäuse aufgenommenen Hauptlichtquelle.

In die Scheinwerferanordnung sollen Elemente für die Lichtemission einer weiteren Lichtquelle integriert werden. In der DE 198 38 224 C2 wird beispielsweise vorgeschlagen, Lichtaustrittselemente einer Zusatzlichtquelle am Umfang der Scheinwerfereinheit anzuordnen. Die Lichtaustrittselemente umfassen die Scheinwerfereinheit dabei zumindest zum Teil. Das Licht der Zusatzlichtquelle wird über die Austrittselemente nach vorne, d.h. in Fahrtrichtung des Kraftfahrzeugs abgestrahlt.

Des weiteren ist in der EP 0 900 694 A2 eine gattungsgemäße Signalleuchte beschrieben, die im Bereich eines Randes eines Scheinwerfers angeordnet sein kann. Das Licht der Lichtquelle der Signalleuchte wird über Lichtleiter in ein langgestrecktes Lichtauskoppelelement eingekoppelt. Die Lichtemission erfolgt auch hier nach vorne in Fahrtrichtung. Dabei verhindern Blenden ein Entweichen des Lichts in radiale Richtung.

Es ist die Aufgabe der vorliegenden Erfindung eine weitere Scheinwerferanordnung für Fahrzeuge vorzuschlagen, in die eine Zusatzlichtfunktion integriert werden kann. Dabei soll insbesondere das Erscheinungsbild der Scheinwerferanordnung sowie die Sichtbarkeit des Fahrzeugs verbessert werden.

Diese Aufgabe wird erfindungsgemäß durch eine Scheinwerferanordnung mit den Merkmalen des Anspruchs 1 gelöst. Vorteilhafte Ausgestaltungen ergeben sich aus den Unteransprüchen.

Die erfindungsgemäße Scheinwerferanordnung ist dadurch gekennzeichnet, dass das Gehäuse eine im wesentlichen horizontal ausgerichtete Abstrahlfläche umfasst, die zumindest zum Teil als Lichtleiter ausgebildet ist, dass in die Abstrahlfläche das Licht einer Zusatzlichtquelle einkoppelbar ist und dass die Auskopplung des Lichts aus der Abstrahlfläche im wesentlichen vertikal in den Gehäuseinnenraum erfolgt. Die erfindungsgemäße Scheinwerferanordnung zeichnet sich demnach insbesondere dadurch aus, dass das Licht der Zusatzlichtquelle nicht nach vorne, d.h. in Abstrahlrichtung des Scheinwerfers erfolgt, sondern im wesentlichen vertikal in den Gehäuseinnenraum. Die Zusatzlichtquelle leuchtet somit den Gehäuseinnenraum aus, selbst wenn die Hauptlichtquelle ausgeschaltet ist. Hierdurch können die optischen Elemente, welche für die Hauptlichtquelle vorgesehen sind, durch die Zusatzlichtquelle besonders hervorgehoben werden. Dies führt zu einem neuen und vorteilhaften Design der Scheinwerferanordnung. Insbesondere die Nachtanmutung der Scheinwerferanordnung kann bei eingeschalteter Zusatzlichtquelle verbessert werden.

Gemäß einer Ausgestaltung der erfindungsgemäßen Scheinwerferanordnung wird die Abstrahlfläche von der Gehäuse-Unterseite gebildet und die Auskopplung des Lichts aus der Unterseite erfolgt im wesentlichen vertikal nach oben in den Gehäuseinnenraum.

Gemäß einer anderen Ausgestaltung der erfindungsgemäßen Scheinwerferanordnung wird die Abstrahlfläche von der Gehäuse-Oberseite gebildet und die Auskopplung des Lichts aus der Oberseite erfolgt im wesentlichen vertikal nach unten in den Gehäuseinnenraum.

Gemäß einer weiteren Ausgestaltung der erfindungsgemäßen Scheinwerferanordnung ist die Abstrahlfläche unterhalb der Hauptlichtquelle im wesentlichen horizontal in das

Gehäuse eingesetzt.

Gemäß einer weiteren Ausgestaltung ist die der Hauptlichtquelle abgewandte Oberfläche der Abstrahlfläche zumindest partiell lichtundurchlässig und/oder verspiegelt. Die Verspiegelung kann beispielsweise durch eine Beschichtung, insbesondere durch Verchromung erfolgen. Hierdurch kann erreicht werden, dass das in die Abstrahlfläche eingekoppelte Licht im wesentlichen vollständig in den Gehäuseinnenraum, der die Hauptlichtquelle enthält, ausgekoppelt wird und keine Verluste durch einen Lichtaustritt nach außen erfolgen. Außerdem wird durch die Verspiegelung das Erscheinungsbild der Scheinwerferanordnung wesentlich verbessert. Von außen sieht man die Lichtleiter der Abstrahlfläche und darunter die verspiegelte Oberfläche.

Gemäß einer weiteren Ausgestaltung weisen die hintere und/oder die seitlichen Randflächen der Abstrahlfläche Abschnitte zum Einkoppeln des Lichts der Zusatzlichtquelle auf. Durch diese Maßnahme kann die Scheinwerferanordnung sehr raumsparend, insbesondere bezüglich der Bauhöhe ausgestaltet werden.

Gemäß einem weiteren Ausführungsbeispiel kann die Abstrahlfläche nach vorne bezüglich der Lichtemissionsrichtung des Scheinwerfers mit einer Leiste abschließen, die einen stabförmigen Lichtleiter umfasst, in den das Licht der Zusatzlichtquelle einkoppelbar ist. Über diesen stabförmigen Lichtleiter kann das Licht an den Lichtleiter der Abstrahlfläche zur Auskopplung übertragen werden. Bei der vorderen Leiste wird in diesem Fall im wesentlichen kein Licht ausgekoppelt. Bei diesem Ausführungsbeispiel kann Licht auch von vorne in die Abstrahlfläche eingekoppelt werden, ohne dass es erforderlich ist, dort eine Lichtquelle vorzusehen. Außerdem kann das Erscheinungsbild der Scheinwerferanordnung durch die Leiste verbessert werden, da die Abstrahlfläche hierdurch hervorgehoben wird.

Gemäß einem anderen Ausführungsbeispiel kann das in den stabförmigen Lichtleiter eingekoppelte Licht auch in Abstrahlrichtung des Scheinwerfers nach vorne auskoppelbar sein. In diesem Fall ergibt sich von außen sowohl ein ausgeleuchteter Gehäuseinnenraum als auch ein in Fahrtrichtung lichtemitierendes Band.

Die Leiste und die Abstrahlfläche können einstückig ausgebildet sein. Dies hat den Vorteil, dass die gesamte Anordnung mit einem Werkzeug gefertigt werden kann. Der Montageaufwand kann hierdurch vorteilhafterweise verringert werden.

Außerdem kann die Leiste im vorderen Bereich der Abstrahlfläche an dieser befestigt sein. Die Befestigung kann durch übliche Mittel, wie z. B. Aufkleben, Klipsen, Einlegen, Einspritzen, Einführen oder Einklemmen erfolgen.

Gemäß einer weiteren Ausgestaltung der Scheinwerferanordnung ist die der Hauptlichtquelle zugewandte Oberfläche der Abstrahlfläche gewellt und/oder geriffelt. Hierdurch kann eine besonders gute Ausleuchtung dieses Gehäuseinnenraums erzielt werden. Außerdem wird das Erscheinungsbild der Scheinwerferanordnung verbessert.

Gemäß einer weiteren Ausgestaltung der Scheinwerferanordnung ist die Abstrahlfläche blau eingefärbt und der Lichtleiter wirkt als Blaufilter. Die Zusatzlichtquelle kann eine Standlichtquelle sein.

Im folgenden wird die Erfindung anhand von Ausführungsbeispielen mit Bezug zu den Zeichnungen erläutert.
Figur 1 zeigt die Abstrahlfläche des Gehäuses der erfindungsgemäßen Scheinwerferanordnung,
Figuren 2A bis 2C zeigen mögliche Anordnungen einer Leiste 3 eines Ausführungsbeispiels der Scheinwerferanordnung,
die Figur 3 sowie die Figuren 4A bis 4C zeigen schematische Teilansichten weiterer Ausgestaltungen der Scheinwerferanordnung mit einer Leiste 3, und

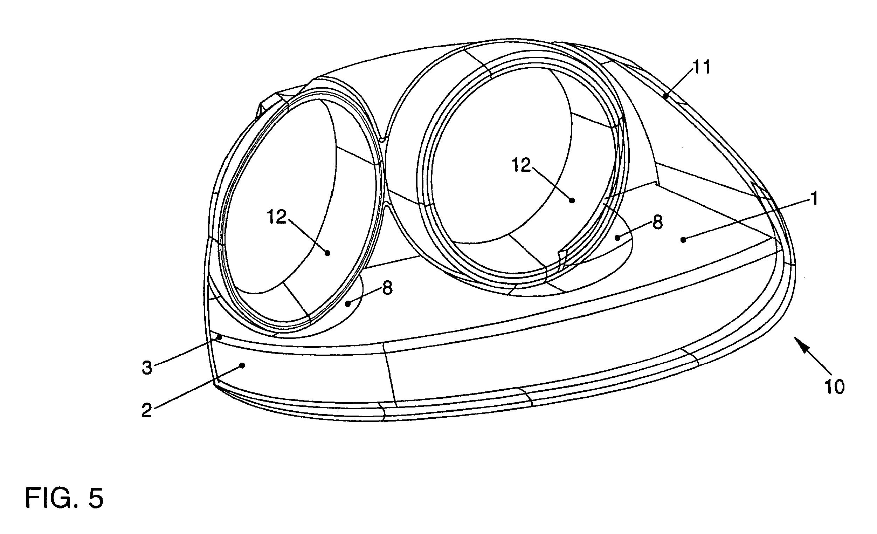

Figur 5 zeigt eine schematische Gesamtansicht der erfindungsgemäßen Scheinwerferanordnung

Die Scheinwerferanordnung 10 weist ein an sich herkömmliches Gehäuse 11 auf, das eine oder mehrere Hauptlichtquellen aufnimmt. Im vorliegenden Ausführungsbeispiel nimmt das Gehäuse 11 zwei Hauptlichtquellen für das Fern- und Abblendlicht auf. Das Gehäuse 11 kann beliebig geformt sein. Diese Hauptlichtquellen sind in zylindrischen Tuben 12 untergebracht, an deren hinteren Enden die Hauptlichtquellen jeweils in einem Reflektor angeordnet sind. Das Gehäuse 11 weist im wesentlichen horizontal ausgerichtete Ober- und Unterseiten auf, seitliche Begrenzungsflächen sowie eine Rückwand, die Ausnehmungen für die Tuben 12 der Hauptlichtquelle besitzt. Nach vorne schließt das Gehäuse 11 mit,einer an die Fahrzeugkarosserie angepassten Abdeckscheibe ab. Die Abdeckscheibe ist durchsichtig und klar. Der Gehäuseinnenraum ist somit von außen gut erkennbar.

Gemäß der vorliegenden Erfindung ist der Bereich oberhalb und/oder unterhalb der Lichtquellen besonders ausgestaltet. Beim vorliegenden Ausführungsbeispiel werden diese Besonderheiten in Bezug auf den Bereich unterhalb der Hauptlichtquellen erläutert, eine entsprechende Ausgestaltung im Bereich oberhalb der Lichtquellen ist jedoch auch möglich. Die folgenden Richtungsangaben beziehen sich auf die Abstrahlrichtung des Lichts des Scheinwerfers. Diese fällt mit der Fahrtrichtung zusammen.

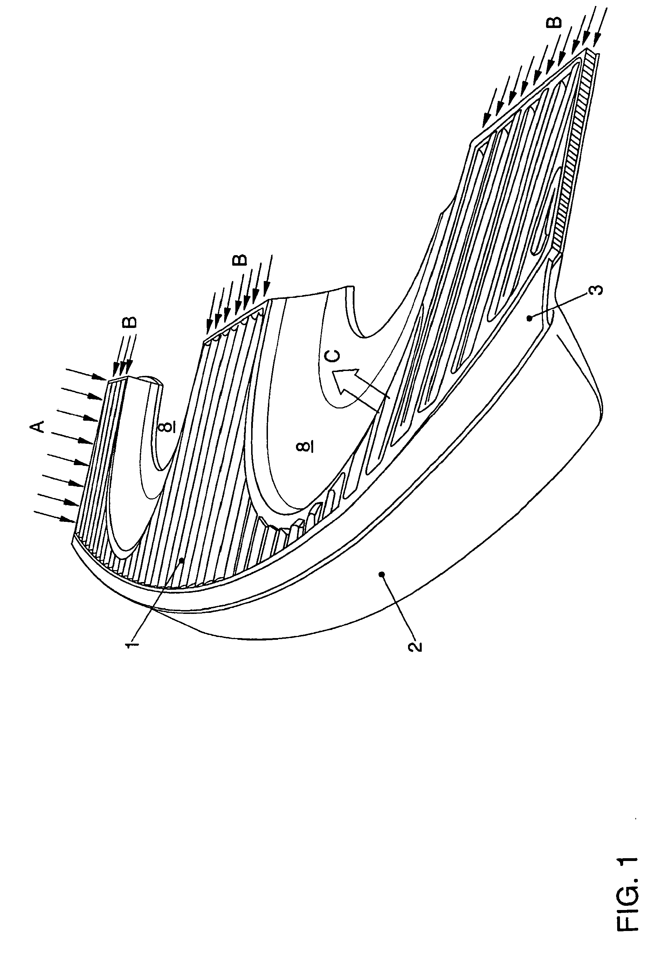

Unterhalb der Lichtquellen und der sie aufnehmenden Tuben 12 ist eine Abstrahlfläche 1 für das Licht einer Zusatzlichtquelle eingesetzt. Hierfür ist die Abstrahlfläche 1 zumindest zum Teil als Lichtleiter ausgebildet. Die Abstrahlfläche 1 weist Ausnehmungen 8 für die Tuben 12 der Hauptlichtquelle auf. Die in Figur 1 sichtbare den Hauptlichtquellen des Gehäuses zugewandte Oberfläche der Abstrahlfläche 1 ist geriffelt bzw. gewellt. Über diese Fläche erfolgt die Auskopplung des Lichts der Zusatzlichtquelle in den Gehäuseinnenraum, d.h. den Raum, in dem sich die Hauptlichtquellen befinden. Die in Figur 1 nicht sichtbare untere Oberfläche der Abstrahlfläche 1 ist verchromt, so dass kein Licht durch diese Oberfläche entweichen kann. Außerdem kann die obere Oberfläche der Abstrahlfläche 1 partiell beschichtet sein. Die partielle Beschichtung kann z. B. eine Verchromung sein. Hierdurch können beliebige Muster erzeugt werden, durch die der Gehäuseinnenraum ausgeleuchtet wird und die von außen sichtbar sind. Die vordere Stirnfläche der Abstrahlfläche 1 ist gemäß dem Ausführungsbeispiel der Figur 1 auch verchromt, so dass im wesentlichen keine Lichtemission nach vorne erfolgen kann. Die Abstrahlfläche 1 ist ein glasklares Kunststoffspritzteil. Als Material kann insbesondere Acrylglas verwendet werden.

Für die Einkopplung des Lichts der Zusatzlichtquelle in die Lichtleiter der Abstrahlfläche 1 gibt es verschiedene Möglichkeiten, die nachfolgend im Detail erläutert werden. Bei allen Varianten wird das in die Abstrahlfläche 1 eingekoppelte Licht im wesentlichen vertikal, d. h. nach oben oder nach unten, in den Gehäuseinnenraum in Richtung der Tuben 12 ausgekoppelt, so dass diese von dem Licht der Zusatzlichtquelle angeleuchtet werden. Diese Lichtauskopplung ist in Figur 1 durch den Pfeil C angedeutet. Es werden somit die Tuben 12 der Hauptlichtquelle von unten angestrahlt und bei eingeschalteter Zusatzlichtquelle besonders hervorgehoben.

Im folgenden werden verschiedene Möglichkeiten der Lichteinkopplung in die Abstrahlfläche 1 beschrieben. Die Möglichkeiten können entweder separat oder kombiniert in verschiedenen Ausgestaltungen der Scheinwerferanordnung 10 verwirklicht werden.

In Figur 1 sind zwei Möglichkeiten der Lichteinkopplung durch die Pfeile A und B gezeigt. Mit Pfeil A ist eine Lichteinkopplung über die seitlichen Randflächen der Abstrahlfläche 1 bezeichnet. Die Pfeile B stellen eine Lichteinkopplung über Abschnitte der hinteren Randfläche der Abstrahlfläche 1 dar. An den Lichteinkoppelflächen können direkt Zusatzlichtquellen angeordnet sein oder weitere Lichtleiter, welche das Licht der Zusatzlichtquelle an die Abstrahlfläche übertragen.

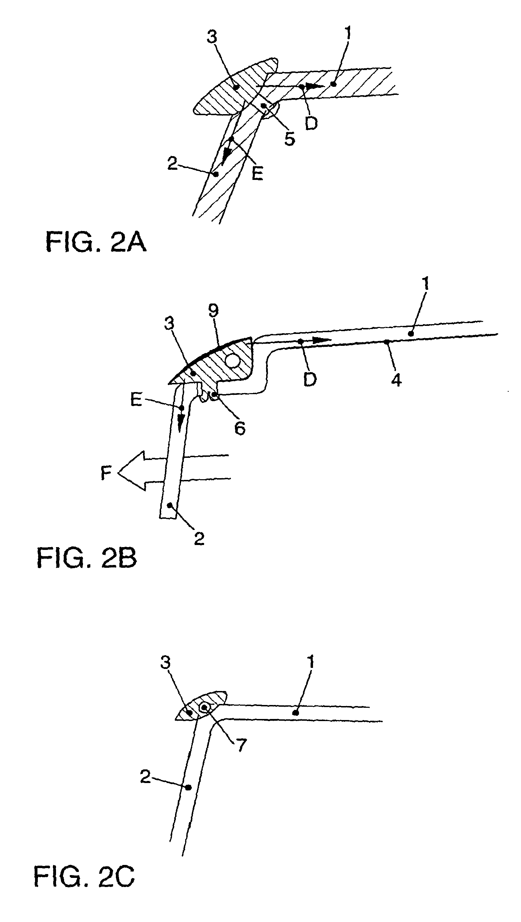

Gemäß einem weiteren Ausführungsbeispiel kann zur Lichteinkopplung eine Leiste 3 verwendet werden, die einen stabförmigen Lichtleiter umfasst, der sich entlang dieser Leiste 3 erstreckt. Die Leiste 3 ist im vorderen Bereich der Abstrahlfläche 1 angeordnet. Die Abstrahlfläche 1 schließt insbesondere nach vorne mit der Leiste 3 ab. Das in den stabförmigen Lichtleiter eingekoppelte Licht der Zusatzlichtquelle wird bei einer Begrenzungsfläche zu der Abstrahlfläche 1 an diese übertragen. Diese Lichtübertragung ist durch den Pfeil D in den Figuren 2A und 2B angedeutet. Die Einkopplung des Lichts in den Lichtleiter der Leiste 3 kann dabei entweder einseitig oder zweiseitig erfolgen. Die von der Abstrahlfläche 1 abgewandte Seite der Leiste 3 kann einerseits mit einer Beschichtung 9 versehen sein, so dass durch diese Fläche kein Licht austritt. Diese Seite kann insbesondere verchromt sein. Andererseits kann auch durch diese Oberfläche eine Lichtauskopplung erfolgen, so dass zusätzlich zu der Lichtemission über die Abstrahlfläche 1 die Leiste 3 als leuchtendes Band erscheint. Die Leiste 3 kann außerdem so ausgebildet sein, dass zusätzlich eine Lichtemission nach vorne unten erfolgt. Durch diese Lichtemission kann ein Blendrahmen angestrahlt werden.

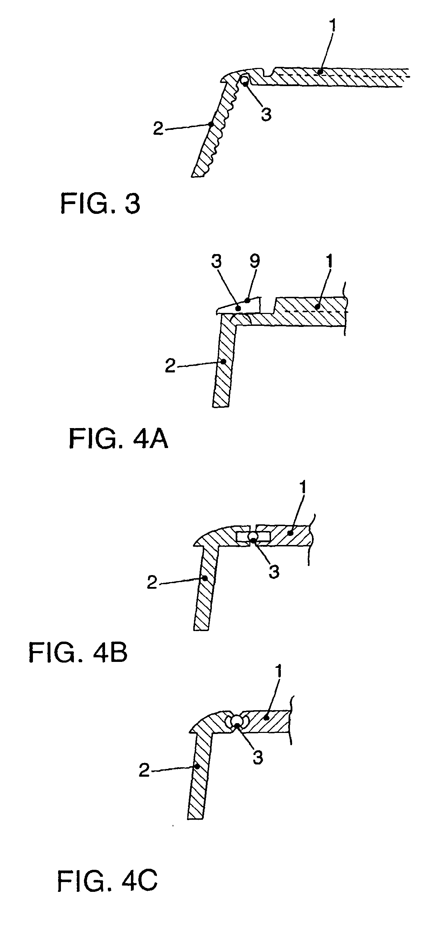

In den Figuren 2A bis 2C, 3 sowie 4A bis 4C sind verschiedene konstruktive Möglichkeiten für die Befestigung der Leiste 3 dargestellt. Die Leiste 3 kann beispielsweise eingelegt, eingespritzt, eingeführt, eingeklipst oder aufgeklebt werden. Außerdem kann sie, wie in Figur 1 gezeigt, einstückig mit der Abstrahlfläche 1 gebildet sein.

Im vorliegenden Ausführungsbeispiel ist an die Abstrahlfläche 1 einstückig eine sich im wesentlichen senkrecht erstreckende Abschlussscheibe 2 angeformt. Diese Fläche 2 ragt von dem Gehäuse weg bzw. in Richtung eines Bereichs des Gehäuses 11, in dem sich nicht die Hauptlichtquellen befinden. Sie kann als Abschlussscheibe für eine weitere Lichtquelle, z. B. die eines Fahrtrichtungsanzeigers, dienen. Auch in diese Fläche kann das Licht der Zusatzlichtquelle eingekoppelt werden, wie es durch den Pfeil E in den figuren 2A und 2B angedeutet ist. Der Pfeil F in Figur 2B deutet dabei die Lichtemission eines Fahrtrichtungsanzeigers an.

Gemäß dem vorliegenden Ausführungsbeispiel ist die Zusatzlichtquelle die Lichtquelle eines Standlichts. Die Standlichtfunktion wird bei der Scheinwerferanordnung 10 somit indirekt über die Ausleuchtung des Gehäuseinnenraums erzielt. Diese Ausleuchtung kann durch eine großflächige Abstrahlung über die innere Oberfläche der Abstrahlfläche 1 erfolgen. Hierdurch wird ein sehr eigenständiges und einprägsames Nachterscheinungsbild der Scheinwerferanordnung bereitgestellt, das auch die Wiedererkennung von Fahrzeugen mit dieser Scheinwerferanordnung erleichtert.

## Patentansprüche

1. Scheinwerferanordnung (10) für Fahrzeuge mit einem Gehäuse (11) und zumindest einer von dem Gehäuse (11) aufgenommenen Hauptlichtquelle,
**dadurch gekennzeichnet,**
- **dass** das Gehäuse (11) eine im wesentlichen horizontal ausgerichtete Abstrahlfläche (1) umfasst, die zumindest zum Teil als Lichtleiter ausgebildet ist,
- **dass** in die Abstrahlfläche (1) das Licht einer Zusatzlichtquelle einkoppelbar ist und
- **dass** die Auskopplung des Lichts aus der Abstrahlfläche (1) im wesentlichen vertikal in den Gehäuseinnenraum erfolgt.

2. Scheinwerferanordnung (10) gemäß Anspruch 1, **dadurch gekennzeichnet, dass** die Abstrahlfläche (1) von der Gehäuse-Unterseite gebildet wird und dass die Auskopplung des Lichts aus der Unterseite im wesentlichen vertikal nach oben in den Gehäuseinnenraum erfolgt.

3. Scheinwerferanordnung (10) gemäß Anspruch 1, **dadurch gekennzeichnet, dass** die Abstrahlfläche (1) von der Gehäuse-Oberseite gebildet wird und dass die Auskopplung des Lichts aus der Oberseite im wesentlichen vertikal nach unten in den Gehäuseinnenraum erfolgt.

4. Scheinwerferanordnung (10) gemäß Anspruch 1, **dadurch gekennzeichnet, dass** die Abstrahlfläche (1) unterhalb der Hauptlichtquelle im wesentlichen horizontal eingesetzt ist.

5. Scheinwerferanordnung (10) gemäß einem der vorstehenden Ansprüche, **dadurch gekennzeichnet, dass** die der Hauptlichtquelle abgewandte Oberfläche der Abstrahlfläche (1) zumindest partiell lichtundurchlässig und/oder verspiegelt ist.

6. Scheinwerferanordnung (10) gemäß einem der vorstehenden Ansprüche, **dadurch gekennzeichnet, dass** die hintere und/oder die seitlichen Randflächen der Abstrahlfläche (1) Abschnitte zum Einkoppeln des Lichts der Zusatzlichtquelle aufweist/aufweisen.

7. Scheinwerferanordnung (10) gemäß einem der vorstehenden Ansprüche, **dadurch gekennzeichnet, dass** die Abstrahlfläche (1) nach vorne bezüglich der Lichtemissionsrichtung des Scheinwerfers mit einer Leiste (3) abschließt, die einen stabförmigen Lichtleiter umfasst, in den das Licht der Zusatzlichtquelle einkoppelbar ist.

8. Scheinwerferanordnung (10) gemäß Anspruch 7, **dadurch gekennzeichnet, dass** das in den stabförmigen Lichtleiter eingekoppelte Licht an den Lichtleiter der Abstrahlfläche (1) zur Auskopplung übertragen wird und bei der vorderen Leiste (3) im wesentlichen kein Licht ausgekoppelt wird.

9. Scheinwerferanordnung (10) gemäß Anspruch 7, **dadurch gekennzeichnet, dass** das in den stabförmigen Lichtleiter eingekoppelte Licht in Abstrahlrichtung des Scheinwerfers nach vorne auskoppelbar ist.

10. Scheinwerferanordnung (10) gemäß einem der Ansprüche 7 bis 9, **dadurch gekennzeichnet, dass** die Leiste (3) und die Abstrahlfläche (1) einstückig ausgebildet sind.

11. Scheinwerferanordnung (10) gemäß einem der Ansprüche 7 bis 9, **dadurch gekennzeichnet, dass** die Leiste (3) im vorderen Bereich der Abstrahlfläche (1) an dieser befestigt ist.

12. Scheinwerferanordnung (10) gemäß einem der vorstehenden Ansprüche, **dadurch gekennzeichnet, dass** die der Hauptlichtquelle zugewandte Oberfläche der Abstrahlfläche (1) gewellt und/oder geriffelt ist.

13. Scheinwerferanordnung (10) gemäß einem der vorstehenden Ansprüche, **dadurch gekennzeichnet, dass** die Abstrahlfläche (1) blau eingefärbt ist und der Lichtleiter als Blaufilter wirkt.

14. Scheinwerferanordnung (10) gemäß einem der vorstehenden Ansprüche, **dadurch gekennzeichnet, dass** die Zusatzlichtquelle eine Standlichtquelle ist.

## Claims

1. Headlamp arrangement (10) for vehicles having a housing (11) and at least one main light source accommodated by the housing (11), **characterized**
- **in that** the housing (11) comprises an emission face (1), which is aligned substantially horizontally and is formed, at least in part, as an optical waveguide,
- **in that** the light from an additional light source can be injected into the emission face (1), and
- **in that** the light is output from the emission face (1) substantially vertically into the housing interior.

2. Headlamp arrangement (10) according to Claim 1, **characterized in that** the emission face (1) is formed by the housing lower side, and **in that** the light is output from the lower side substantially vertically upwards into the housing interior.

3. Headlamp arrangement (10) according to Claim 1, **characterized in that** the emission face (1) is formed by the housing upper side, and **in that** the light is output from the upper side substantially vertically downwards into the housing interior.

4. Headlamp arrangement (10) according to Claim 1, **characterized in that** the emission face (1) is inserted substantially horizontally beneath the main light source.

5. Headlamp arrangement (10) according to one of the preceding claims, **characterized in that** the surface of the emission face (1) which faces away from the main light source is at least partially opaque and/or mirror-coated.

6. Headlamp arrangement (10) according to one of the preceding claims, **characterized in that** the rear and/or the lateral edge faces of the emission face (1) has/have sections for injecting the light from the additional light source.

7. Headlamp arrangement (10) according to one of the preceding claims, **characterized in that** the emission face (1) terminates at the front with respect to the light emission direction of the headlamp with a strip (3), which comprises a rod-type optical waveguide, into which the light from the additional light source can be injected.

8. Headlamp arrangement (10) according to Claim 7, **characterized in that** the light injected into the rod-type optical waveguide is transmitted using the optical waveguide to the emission face (1) in order to be output, and, in the case of the front strip (3), substantially no light is output.

9. Headlamp arrangement (10) according to Claim 7, **characterized in that** the light injected into the rod-type optical waveguide can be output forwards in the emission direction of the headlamp.

10. Headlamp arrangement (10) according to one of Claims 7 to 9, **characterized in that** the strip (3) and the emission face (1) are integral.

11. Headlamp arrangement (10) according to one of Claims 7 to 9, **characterized in that** the strip (3) is fixed to the emission face (1) in its front region.

12. Headlamp arrangement (10) according to one of the preceding claims, **characterized in that** the surface of the emission face (1) which faces the main light source is corrugated and/or fluted.

13. Headlamp arrangement (10) according to one of the preceding claims, **characterized in that** the emission face (1) is coloured blue, and the optical waveguide acts as a blue filter.

14. Headlamp arrangement (10) according to one of the preceding claims, **characterized in that** the additional light source is a parking light source.

## Revendications

1. Phare (10) pour véhicules, avec un boîtier (11) et au moins une source de lumière principale logée dans le boîtier (11), **caractérisé en ce que**
- le boîtier (11) comprend une surface rayonnante (1) orientée essentiellement à l'horizontale, qui forme au moins en partie un guide de lumière,
- la lumière d'une source de lumière auxiliaire peut être injectée dans la surface rayonnante (1), et
- la sortie de la lumière hors de la surface rayonnante (1) se fait essentiellement à la verticale dans l'espace intérieur du boîtier.

2. Phare (10) selon la revendication 1, **caractérisé en ce que** la surface rayonnante (1) est formée par le côté inférieur du boîtier et **en ce que** la sortie de la lumière hors du côté inférieur se fait essentiellement à la verticale vers le haut dans l'espace intérieur du boîtier.

3. Phare (10) selon la revendication 1, **caractérisé en ce que** la surface rayonnante (1) est formée par le côté supérieur du boîtier et **en ce que** la sortie de la lumière hors du côté supérieur se fait essentiellement à la verticale vers le bas dans l'espace intérieur du boîtier.

4. Phare (10) selon la revendication 1, **caractérisé en ce que** la surface rayonnante (1) est disposée essentiellement horizontalement sous la source de lumière principale.

5. Phare (10) selon l'une quelconque des revendications précédentes, **caractérisé en ce que** la surface de la surface rayonnante (1) située à l'opposé de la source de lumière principale est au moins en partie opaque à la lumière et/ou métallisée.

6. Phare (10) selon l'une quelconque des revendications précédentes, **caractérisé en ce que** la surface de bord arrière et/ou les surfaces de bord latérales de la surface rayonnante (1) comporte[nt] des segments destinés à l'injection de la lumière de la source de lumière auxiliaire.

7. Phare (10) selon l'une quelconque des revendications précédentes, **caractérisé en ce que** la surface rayonnante (1) se termine vers l'avant, par rapport à la direction d'émission de lumière du phare, avec une réglette (3), qui contient un guide de lumière en forme de barre dans lequel la lumière de la source de lumière auxiliaire peut être injectée.

8. Phare (10) selon la revendication 7, **caractérisé en ce que** la lumière injectée dans le guide de lumière en forme de barre est transmise au guide de lumière de la surface rayonnante (1) pour en sortir et il ne sort essentiellement aucune lumière de la réglette avant (3).

9. Phare (10) selon la revendication 7, **caractérisé en ce que** la lumière injectée dans le guide de lumière en forme de barre peut sortir vers l'avant dans la direction d'émission du phare.

10. Phare (10) selon l'une quelconque des revendications 7 à 9, **caractérisé en ce que** la réglette (3) et la surface rayonnante (1) sont formées d'une seule pièce.

11. Phare (10) selon l'une quelconque des revendications 7 à 9, **caractérisé en ce que** la réglette (3) est fixée à la surface rayonnante (1) dans la région antérieure de celle-ci.

12. Phare (10) selon l'une quelconque des revendications précédentes, **caractérisé en ce que** la surface de la surface rayonnante (1) tournée vers la source de lumière principale est ondulée et/ou striée.

13. Phare (10) selon l'une quelconque des revendications précédentes, **caractérisé en ce que** la surface rayonnante (1) est colorée en bleu et le guide de lumière fait office de filtre bleu.

14. Phare (10) selon l'une quelconque des revendications précédentes, **caractérisé en ce que** la source de lumière auxiliaire est une source de lumière de feux de position.
